# EUROPEAN PATENT SPECIFICATION

(11) **EP 2 067 833 B1**
(45) Date of publication and mention of the grant of the patent: **02.12.2015**
(21) Application number: 08102145.3
(22) Date of filing: 29.02.2008
(51) Int. Cl.: C09D 175/04, C09D 127/18, C08J 7/04, B60S 1/38, C08L 83/04, C08K 3/04, C08K 3/08

(54) **COMPOSITION FOR COATING WIPER BLADE RUBBERS, COATING METHOD USING THE SAME, AND WIPER BLADE RUBBERS MADE THEREFROM**
ZUSAMMENSETZUNG ZUR BESCHICHTUNG VON WISCHBLATTGUMMIS, BESCHICHTUNGSVERFAHREN UNTER VERWENDUNG DER ZUSAMMENSETZUNG UND DARAUS HERGESTELLTE WISCHBLATTGUMMIS
COMPOSITION POUR LE REVÊTEMENT EN CAOUTCHOUC DE BALAIS D'ESSUIE-GLACE, PROCÉDÉ DE REVÊTEMENT L'UTILISANT, CAOUTCHOUC DE BALAIS D'ESSUIE-GLACE FABRIQUÉS À PARTIR DE CELLE-CI

(30) Priority: 17.08.2007 KR 20070083002; 17.12.2007 KR 20070132644
(43) Date of publication of application: 10.06.2009
(73) Proprietor: The Korea Development Bank, Yeongdeungpo-gu Seoul 150-973 (KR)
(72) Inventor: Jeon, Sun Mi, Ansan-si 426-767, GYEONGGI-DO (KR)
(74) Representative: Cabinet Plasseraud

(56) References cited:
- EP-A- 0 562 191
- EP-A- 0 863 057
- WO-A-03/106575
- DATABASE WPI Week 199617 Thomson Scientific, London, GB; AN 1996-167292 XP002507855 & JP 08 048800 A (AKUROSU KK) 20 February 1996 (1996-02-20)

## Description

### 2. Detailed description of the invention

### Technical field

The present invention relates to a coating composition for wiper blade rubbers. More specifically, the present invention relates to a nano-sized Teflon composition for coating wiper blade rubbers to improve endurance and resistance to frictional forces of the blade rubbers, a coating method using the same, and wiper blade rubbers produced by said method.

### Technical background

For an automobile in general, strip rubbers for a wiper, that are attached to a wiper blade, are run by wiper arm of the vehicle. With such drive apparatus, strip rubbers of a wiper constantly slide over the windshield of a vehicle from side to side to remove any raindrops, snow-flakes, and dust, etc., thus providing a car driver with a good visibility. Because the region of a wiper blade which contacts the windshield is generally strip-shaped, wiper blade rubbers are often called as strip rubbers for wiper blades, or more shortly wiper blade rubbers or wiper blades. Thus, said terms are used herein interchangeably.

Wiper rubbers which are attached to a frame of wiper blade are made of elastic materials. Specifically, wiper rubbers are divided into a head part that is joined to a frame of wiper blade and a wedge part that contacts the windshield of a motor vehicle (i.e., wiper blade part). The wiper head part and the wedge part are assembled in a way that they can fold in an opposite direction compared to the direction of windshield glass washing, based on frictional forces occurring between the windshield and the wiper rubbers. As a result, the wiper rubbers can maintain its uniform cleaning ability, possibly without any slipping.

Materials for preparing such wiper blade rubbers should have not only a good mechanical property but also should satisfy other complex requirements that are related to the safety of a vehicle against any external influences. Wiper rubber materials should have flexibility and slide smoothly over the car windshield. Furthermore, they should have a resistance to external influences, especially to oxidation (ozone cleavage), mineral oil and chemicals that are contained, for example, in washing fluid.

### Technical problems to be solved

Materials used for preparing a wiper blade are generally rubbers, i.e., vulcanized natural rubbers or synthetic rubbers. However, in order to improve the sliding properties of the rubbers, additional treatments including coating the surface of the wiper blade rubbers, chlorinating it, or coating it with a sliding powder agent such as molybdenum sulfide have been suggested.

The wiper rubber described in DE-C-35 27 093 is preponderantly consists of EPDM (Ethylene-Propylene-Dien-Monomer). Meanwhile, in EPDM, the unsaturation sites are present outside the main ring of the polymer. As a result, EPDM has not been halogenated and has no endurance to mineral oil and chemicals contained in washing fluid. Therefore, according to DE-C-35 27 093, in order to improve the sliding properties and the endurance of wiper blades consisting preponderantly of EPDM, chlorinated diene-type rubber segments were placed on a matrix that is consisted of EPDM, at least in the regions that slide over the car windshield during proper use. However, it is disadvantageous in that such wiper rubbers have a rather complex structure having layers of different rubber materials.

On the other hand, according to WO 1999/39948, a wiper blade is disclosed in which different kinds of wiper rubber materials are used for a head part and a wedge, respectively. In this invention, since the head part made of a diene-type rubber can be halogenated, favorable sliding properties and smooth running can be obtained. Further, an easy access to the regions in which the wiper blade cooperates with the supporting strip and the spring rail of the metallic support and a harder surface can be also obtained. In addition, for the flexing part and the wedge of the wiper blade, chloroprene rubber (CR) is used according to said invention. Meanwhile, chloroprene has excellent mechanical properties with high resistance to the external influences including bad weather, aging, chemicals, and temperature. Therefore, a favorable wiper quality can be achieved in a simple and inexpensive manner according to said invention. However, although chloroprene has a high resistance to the external influences including bad weather, aging, chemicals, and temperature, etc., it has a limitation including poor resistance to frictional forces which occur between windshield glass and wiper rubbers, etc.

Meanwhile, according to KR 20050006677 A, a windshield wiper blade coating composition and its coating method are described. This coating composition comprises graphite and dimethyl silicone oil as an essential constituent and further comprises a resin selected from polyol resin, urethane resin, fluoro resin having hydroxyl group, epoxy resin and silicone resin with the presence of solvent. It is disclosed in the patent that, when a windshield wiper blade which has been coated with such coating composition is operated over a car windshield glass, a water-repelling film having high endurance can be formed on the glass and a noise and shaking of the wiper blade can be prevented. However, according to the disclosure of said patent, an organic solvent selected from methylethyl ketone, toluene, xylene and butyl acetate is used and resins used are not limited to water-based resin so that a problem of causing environmental pollution is unavoidable.

Document WO 03/106575 discloses a wiper blade having a coating with a low coefficient of dry friction. The coating comprises a lubricant having a particle size of less than 30 µm, as well as silicone and polyurethane. Graphite in combination with polytetrafluoroethylene is stated as particularly suitable.

Object of the present invention is to provide an environmentally-friendly Teflon coating composition which has a high endurance to external influences such as bad weather, chemical agents, and temperature, etc. and can be used for coating wiper blade rubbers to improve a resistance to frictional forces. In addition, another object of the present invention is to provide a coating composition which has an excellent coating effect and can maintain water-repellency for long period of time compared to the coating composition disclosed in KR 2005 000 66 77 A, by carrying out an coating using nano-sized particles that are smaller than the particles used in the conventional coating composition.

### Means to solve the technical problems

The above-described object of the present invention is achieved by providing a composition for coating wiper blade rubbers, comprising 3.5 to 15 wt% of polytetrafluoroethylene, 3.2 to 9.6 wt% of polyurethane, 1.6 to 6.0 wt% of polyhydromonomethylsiloxane oil or resin, and 5.0 to 25.0 wt% of a water-based resin in the presence of solvent, wherein all of said Teflon, urethane, silicone resin and water-based resin have a particle size of 50 to 500 nm. It is particularly preferred that distilled water is used as a solvent for said composition.

According to one embodiment of the present invention, the coating composition of the present invention may comprise 0.16 to 0.24 wt% of silver component, or 3.5 to 15 wt% of graphite or carbon black, or both of the silver component and the graphite component, which can be all used as particles having a particle size of 50 to 500 nm.

The wiper rubbers used in the present invention are general rubbers, i.e., vulcanized natural rubbers or synthetic rubbers can be used. However, as it has been exemplified in said prior art invention, it is preferred to use diene-type rubber or chloroprene rubber. More preferably, said diene-type rubber is a natural rubber, butadiene rubber, styrene-butadiene rubber, EPDM (ethylene propylene diene monomer). If necessary, a silicone rubber can be also used.

Meanwhile, said object of the present invention is further achieved by a method of coating wiper rubber blades with the above-described coating composition of the present invention and by the wiper rubber blades that are produced by said method. In particular, coating is preferably carried out by a first coating wherein the wiper blade rubbers are coated with an intermediate medium to improve water-repellency and an endurance, followed by a second coating. For a second coating, it is preferred that surface of the rubbers being used is pre-heated to the temperature at which the rubber surface can expand, and then a second coating is carried out thereto by spray coating method.

Teflon, which is used as an essential component for the composition of the present invention, is a commercial name referring to polytetrafluoroethylene (PTFE), a typical example of synthetic fluororesin. As a crystalline resin, it has a heat-resistance enduring long-term use at 260 °C and is known as a special synthetic resin having a favorable chemical-resistance, electric insulating property, non-stickiness, and low frictional coefficient, etc. Especially, PTFE is a crystalline polymer having melting temperature of 327C° and it has a continuous use temperature of 260°C. Furthermore, being stable from low (-268°C) to high temperature, it is known to be used in wide range of temperatures.

In addition, Teflon's resistance to a chemical is known to be the best among many organic materials. Especially, Teflon is not degraded at all by acid, alkali, and various solvents. It is only degraded under extreme conditions including special chemicals such as fluorine gas and molten alkaline metals, etc. Thus, it is widely used as a material for preparing gasket, packing and various sealants. The most remarkable mechanical property of Teflon is its low frictional coefficient. As such, it is used as a reinforce material for various fillers. With high non-stickiness, it is also known as the best synthetic resin for manufacturing frying pans and for coating various steel pipes.

Inventors of the present invention found that, when a composition containing Teflon is coated onto wiper blade rubbers, not only a high endurance to external influences including bad weather, aging, chemical agents, and temperature can be given to the wiper blade rubbers but also a resistance to frictional forces occurring between windshield glass and wiper blade rubbers can be improved, by taking an advantage of the above-described favorable physicochemical and mechanical properties of Teflon. As a result, the present invention was completed.

Teflon is used within a range of 3.5 to 15 wt% based on the total weight of the composition. If Teflon is used in an amount outside said range, desired coating effect of the composition cannot be obtained. Preferably, constitutional ratio of Teflon in the composition is between 7 to 8 wt%.

Polyurethane used in the present invention is a synthetic polymer compound having urethane linkages inside main chains of the polymer, which is obtained by polyaddition reaction by which urethane linkages are repeatedly formed between diisocyante and dialcohol. Any kinds of commercially available, water-soluble polyurethane can be used in the present invention.

Urethane is used within a range of 3.2 to 9.6 wt% based on the total weight of the composition. If urethane is used in an amount outside said range, desired coating effect of the composition cannot be obtained. Preferably, constitutional ratio of urethane in the coating composition is between 5 to 7 wt%.

Polyhydromonomethylsiloxane oil or resin used in the present invention is a polymer of organic derivatives of silicone compound. It is also referred to as silicon resin. Molecular structure of the silicone resin includes a silicon skeleton having siloxane linkage (Si-O linkage) wherein silicon atom alternates with oxygen atom and methyl group, attached to the silicon atom. The silicone resin is a thermoplastic synthetic resin and has a defoaming activity in most of the solvents that are commonly used. It also has water-repellency (i.e., water-resisting activity) when it is applied to inorganic or organic materials.

The silicone resin is used within a range of 1.6 to 6.0 wt% based on the total weight of the composition. If the silicone resin is used in an amount more than 6 wt%, a white coat phenomenon occurs, preventing the achievement of the purpose of the present invention. Use of the silicone resin less than 1.6 wt% is not allowed for the same reason. Preferred constitutional ratio of the silicone resin is between 2 to 3 wt%.

Meanwhile, in addition to the silicone resin that is used to enhance the water-repellency of the coating composition of the present invention, a commercially available water-based resin is further added to the composition of the present invention in order to provide wiper blades with additional favorable physicochemical properties other than water-repellency. In this regard, a thermosetting water-based resin is preferable in the present invention. Urethane resin is most preferred.

The water-based resin is used within a range of 5 to 25 wt% based on the total weight of the composition. If the water-based resin is used in an amount outside said range, desired effect of the composition cannot be obtained. Preferably, constitutional ratio of the water-based resin in the composition is 20 wt%.

Moreover, in addition to said favorable mechanical properties, to give a high endurance to the coating composition of the present invention against external influences, commercially available graphite or carbon black can be added to the composition.

Furthermore, silver is known for its antibacterial, germ-killing and endurance-increasing activity as well as the activity of enhancing favorable properties of chemicals. Since such properties of silver are also desirable for the wiper blades of the present invention, silver can be advantageously used for the coating composition of the present invention. Being effective even in a small amount, silver can be used within a range of between 0.16 and 0.5 wt% based on the total weight of the coating composition. If silver is used in an amount outside said range, desired effect of the composition cannot be obtained and/or it becomes economically unfavorable.

The reason for further adding graphite or carbon black in addition to silicone resin to the coating composition of the present invention is as follows. When a wiper glides over the windshield, water-repelling silicone component present in the coated wiper blade rubbers is first transferred to the windshield glass. As a result, the windshield glass can have a water-repellent activity. However, such water-repellent components contribute to the increase in frictional coefficients so that noise and/or shaking may occur during wiping action of a wiper. Thus, in order to prevent such undesirable phenomena, graphite or carbon black, which can reduce frictional coefficient, are introduced for preparing the coating composition. Graphite and carbon black can be used within a range of 3.5 to 15 wt% based on the total weight of the composition. If they are used in an amount outside said range, desired effect of the composition cannot be obtained and/or it becomes economically unfavorable.

The coating composition of the present invention may further comprise a dispersing agent which can aid an easy preparation or a quick drying of the composition, as well as other additives including a stabilizer, a drying agent, a thickening agent, and a defoaming agent which are used for enhancing a coating property of the composition. Being effective even in a small amount, the dispersing agent and the additives can be respectively used within a range of 0.5 wt% based on the total weight of the coating composition.

Finally, as a solvent to prepare the coating composition of the present invention environmentally-friendly water (distilled water) is used. When distilled water is not enough to quickly dissolve the above-described components required for preparing the coating composition of the present invention, a mixture comprising distilled water and a small amount of lacquer thinner can be used. Lacquer thinner which can be used in the present invention is a mixed solvent that is generally used in the pertinent art in order to lower the viscosity of a paint when it is actually applied. A commercial product can be easily obtained and used.

Particles of the coating composition of the present invention are nano-sized particles, which are smaller than those of a conventional coating composition. In order to prepare a coating composition comprising nano-sized particles, each of the coating components are first prepared in a form of particles having a particle size of 50-500 nm, and then dissolved in distilled water as a solvent to provide the coating composition. In this regard, a Teflon product having a particle size of about 300 nm is preferably used as a Teflon component of the present invention. For other components, products having a particle size of about 400 nm are preferably used.

For carrying out a coating with the nano-sized composition described above, wiper blade rubbers are first pre-heated at temperature of 60-100 °C to expand the rubber surface, and then the coating composition is sprayed thereto. The temperature for said pre-heating can be varied depending on the nature of the rubbers to be treated. It generally corresponds to the temperature at which the rubber surface can be expanded, preferably 80 °C. Since such pre-heating is involved with a spraying with nano-sized components, the penetration of the coating components to the inside of the rubber occurs in addition to the coating of the rubber surface, which is different from the conventional coating methods. Therefore, the coating composition of the present invention is advantageous in that the coating effect is excellent and water-repellency can be maintained for a longer period of time compared to the compositions of prior art.

The wiper blade rubbers of the present invention can be produced in accordance with any conventional methods. Still, as it has been described in the above-described prior art invention, it is advantageously produced by means of coextrusion of diene-elastic rubber and chloroprene-elastic rubber. In such case, an unvulcanized strip having a pre-determined cross-sectional form is produced first. The wiper blade rubbers are then preferably subjected to a vulcanization treatment and, if necessary, to a chloride treatment using hypochlorite salt or trichlorocyanuric acid.

Because the coating composition of the present invention simultaneously comprises graphite or carbon black and silicone components, both of a single-coat system by which dual effects of a graphite coating and a subsequent silicone coating can be obtained at once and a two-coat system wherein a treatment with a primer is first carried out and then a high-level coating is carried out, to avoid an endurance problem originating from weak adhesiveness of a certain component, can be considered.

### Effect of the invention

Windshield wiper blades coated with the Teflon coating composition of the present invention is excellent in wiping property and has a relatively low friction coefficient. Thus, car noise and chattering caused by wiper motion can be reduced. In order to specifically confirm such effects, coating compositions are prepared in the following examples and a wiping ability test, a test for measuring water-repellent coating, and a test for measuring frictional forces are carried out for the compositions as described below.

### Specific embodiments for carrying out the invention

Herein below, the preparation of the coating composition and the coating process using the same are briefly explained in view of specific examples.

### Example 1

To distilled water that is used as a solvent, 25 wt% of Teflon, 25 wt% of urethane resin, 1 wt% of silicone resin, 1 wt% of carbon black, 2 wt% of silver and the remaining weight percentage of the coating additives were added. The Teflon used in this example has a particle size of about 300nm, and other components have a particle size of about 400nm to prepare a coating compositing comprising nano-sized particles.

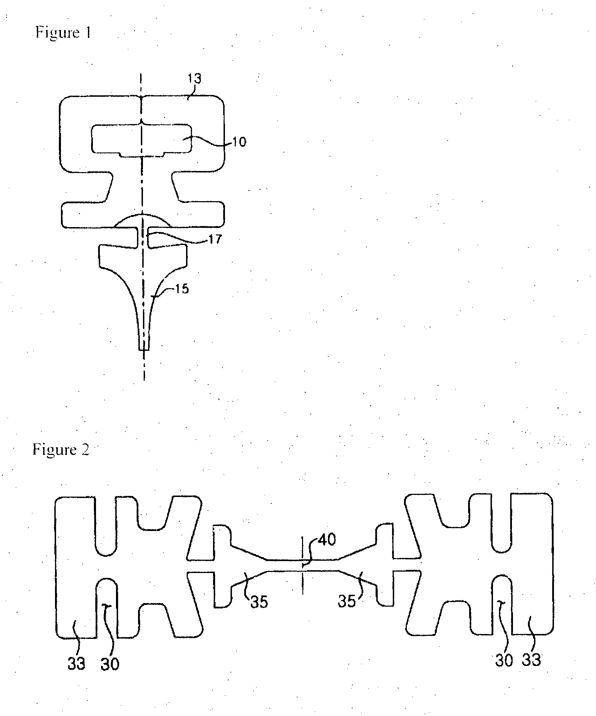

Figure 1 shows a cross-section of conventional wiper blade rubbers in which a head part (13) having an internal spring rail (10) is coupled to a wedge part (15) contacting the surface of windshield glass via flexing bridge (17). On the other hand, Figure 2 shows a cross-section of two wiper blade rubbers of the present invention in which two wiper blade rubbers, comprising in one integrated body a head part (33) with an external spring rail (30) and a wedge part (35) contacting the surface of the windshield glass, are loosely connected and facing each other via connection (40).

According to the present invention, conventional wiper blade rubbers of Figure 1 can be coated with the coating composition of the present invention as prepared above. Although it is not illustrated, the coating composition of the present invention can be applied similarly to wiper strips for the conventional wiper blades in which a head part having an external spring rail is coupled with a wedge part contacting the surface of the windshield glass via flexing bridge or for other conventional wiper blades in which a head part having an external spring rail is coupled with a wedge part in an integrated body.

However, according to the present invention, two wiper blade rubbers are first formed as a single molded piece in which they are joined to each other at the middle region, e.g., connection (40). After forming a slight dent over the connection region (40) of the rubber instead of making a complete cut, a pre-treatment using an intermediate medium, which facilitates smooth coating of the composition, is carried out. Then, the previously prepared coating composition is coated over the entire surface of the wiper blade rubbers using spray coating method. Thereafter, a complete cut was made with a knife along the connection region (40) to yield two separate wiper blade rubbers that can be used separately.

### Example 2 Not according to the invention

To distilled water that is used as a solvent, 18 wt% of Teflon, 20 wt% of urethane resin, 7 wt% of graphite, 2 wt% of silver and the remaining weight percentage of the coating additives were added. The Teflon used in this example has a particle size of about 300nm, and other components have a particle size of about 400nm to prepare a coating compositing comprising nano-sized particles.

Method for coating the coating composition obtained from Example 2 to wiper blade rubbers can be carried out similarly to those explained in above Example 1.

### Example 3 Not according to the invention

To distilled water that is used as a solvent, 8 wt% of Teflon, 20 wt% of urethane resin, 9 wt% of graphite, 2 wt% of silver and the remaining weight percentage of the coating additives were added. The Teflon used in this example has a particle size of about 300 nm, and other components have a particle size of about 400 nm to prepare a coating compositing comprising nano-sized particles.

Method for coating the coating composition obtained from Example 3 to wiper blade rubbers can be carried out similarly to those explained in above Example 1.

### Test 1 (Test for measuring wiping ability)

In order to measure the wiping ability of the wipe blades prepared above, a test apparatus which corresponds to an apparatus used for measuring wiping ability of a wiper blade as prescribed in KS R 3015, RS R 0031 was used and the results were expressed as a wiping score. Specifically, such test method is a sensitivity measurement test in which water is poured over a car windshield and then wipers are actually run to evaluate the wiping quality of the wipers (e.g., 10 is the maximum score).

For carrying the test, the coating composition prepared in above Example 1 was first selected. Then, 'EF Sonata', which is one of the automobile models manufactured by Hyundai Motor Company, was chosen as a test vehicle. The selected coating composition was applied to said test vehicle and wiping quality was evaluated under the weather conditions including temperature of 28.3 °C and humidity of 74% (score 10 was given to the standard highest wiping quality). For the non-coated wiper blade rubbers (1-1), experimental results (i.e., scores) are given in the following Table 1. For the coated wiper blade rubbers (1-2), experimental results are given in the following Table 2.

**Table 1 (Experimental results before rubber coating)**

| | 1 | 2 | 3 | 4 | 5 | 6 | 7 | 8 | 9 | 10 | 11 | 12 | 13 | 14 | Mean value |
|---|---|---|---|---|---|---|---|---|---|---|---|---|---|---|---|
| Up | 6 | 6 | 7 | 6 | 5 | 7 | 5 | 4 | 6 | 6 | 5 | 7 | 7 | 7 | 5.9 |
| Down | 7 | 7 | 7 | 6 | 5 | 6 | 4 | 5 | 5 | 6 | 5 | 5 | 5 | 6 | 5.6 |

**Table 2 (Experimental results after rubber coating)**

| | 1 | 2 | 3 | 4 | 5 | 6 | 7 | 8 | 9 | 10 | 11 | 12 | 13 | 14 | Mean value |
|---|---|---|---|---|---|---|---|---|---|---|---|---|---|---|---|
| Up | 9 | 9 | 9 | 9 | 8 | 10 | 8 | 8 | 9 | 9 | 10 | 9 | 10 | 10 | 9.1 |
| Down | 9 | 9 | 9 | 9 | 9 | 9 | 8 | 8 | 9 | 9 | 10 | 8 | 9 | 10 | 8.9 |

Comparing the results given in the above Table 1 and Table 2, mean value of the wiping ability for the wiper blade rubbers before rubber coating was 5.9 and 5.6, for the up and down motions of the wiper blades, respectively. On the other hand, mean value of the wiping ability for the wiper blade rubbers after rubber coating was 9.1 and 8.9, for the up and down motions of the wiper blades, respectively. Therefore, according to the above-described sensitivity evaluation test, it is again confirmed that the wiping ability of the wiper blade rubbers after the coating is about two times better than that of the wiper blade rubbers before the coating.

### Test 2 (Test for measuring water-repellent property of the coating)

Endurance of water-repellent property (water repellency, %) was measured according to the condition prescribed in JIS D5710 standard. Water repellency testing for the coating of the wiper blades was carried out by two different ways, i.e., (1) wiper blade which had been coated with the coating composition obtained from the above Example 1 itself was directly subjected to a water repellency test, or (2) a pretreatment with water-repellent tissue was first carried out, and then a wiper blade was coated with the coating composition obtained from the above Example 1, which was then subjected to a water repellency test. In this regard, said treatment with water-repellent tissue means that a commercially available tissue for obtaining a water-repelling effect is simply used first. Since such tissue carries a water-repellent liquid, when a treatment using it is carried out first, the water-repellent liquid becomes transferred to a windshield glass so that an additional water-repelling effect can be obtained instantly.

For a comparative test, a commercially available water-repellent coating wiper (manufactured by Carex, Co., described as a 'Commercial product' herein below) was used. For a product prepared according to the present invention, 'NTP815' was used. For Commercial product, toxic materials of toluene and xylene were used as a solvent and a water-based resin, respectively. On the contrary, for 'NTP815' of the present invention, distilled water which is safe to human and urethane resin were used as a solvent and a water-based resin, respectively, thus making 'NTP815' an environmentally friendly product.

### (2-1) Water repellency test without treatment with a water-repellent tissue

Number of the back-and-forth motion of a wiper was set 114, 228, 380 or 5,380 and the results of a water repellency test for each case are summarized in the following Table 3.

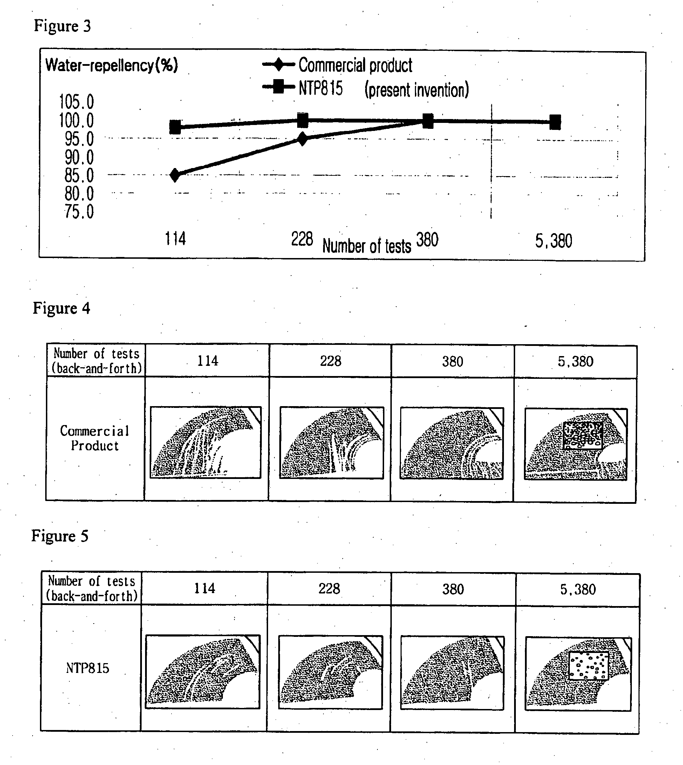

Figure 3 is a graph showing the relationship between the water repellency and the number of tests. Figure 4 and Figure 5 represent actual photographic images of the test.

**Table 3**

| | Water repellency (%) | | | |
|---|---|---|---|---|
| Number of tests | 114 | 228 | 380 | 5,380 |
| Commercial product | 85.0 | 95.0 | 100.0 | 100.0 |
| NTP815 | 98.0 | 100.0 | 100.0 | 100.0 |

As a result of analyzing the results of the above Table 3, it is found that initial water repellency is improved in the present invention compared to Commercial product, since the water-repellent area is about 12% greater for the present invention than that of Commercial product, when the initial water repellency test was carried out without the treatment of a water-repellent tissue.

### (2-2) Water repellency test after the treatment with a water-repellent tissue

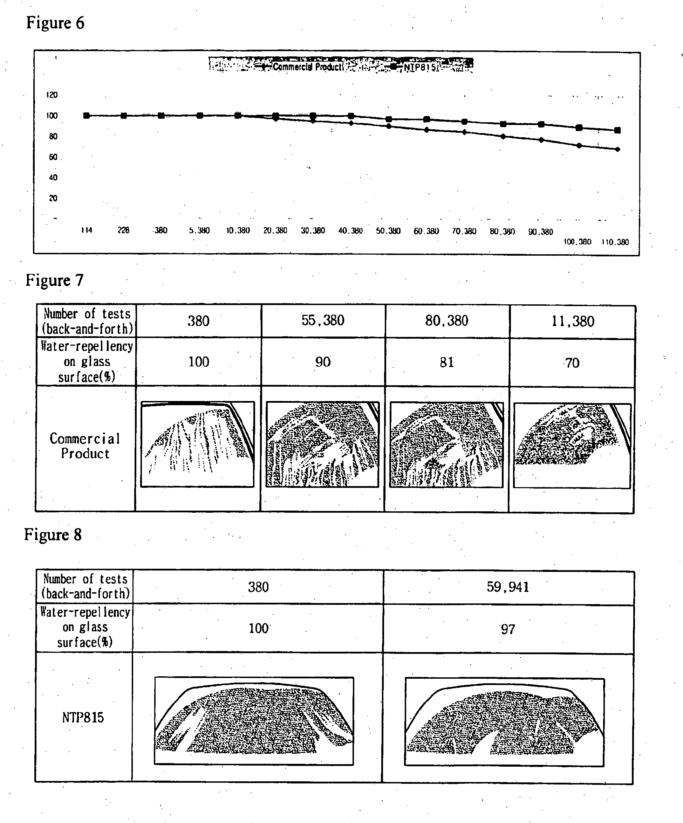

Number of the back-and-forth motion of a wiper was set 15 and the results of a water repellency test are summarized in the following Table 4. Figure 6 is a graph showing the relationship between the water repellency and the number of tests. Figure 7, Figure 8 and Figure 9 represent actual photographic images of the test.

**Table 4**

| | Water repellency (%) | | | | | | | |
|---|---|---|---|---|---|---|---|---|
| Number of tests | 114 | 228 | 380 | 5,380 | 10,380 | 20,380 | 30,380 | 40,380 |
| Commercial product | 100.0 | 100.0 | 100.0 | 100.0 | 100.0 | 97.0 | 95.0 | 93.0 |
| NTP815 | 100.0 | 100.0 | 100.0 | 100.0 | 100.0 | 100.0 | 100.0 | 100.0 |
| Number of tests | 50,380 | 60,380 | 70,380 | 80,380 | 90,380 | 100,380 | 110,380 | |
| Commercial product | 90.0 | 87.0 | 85.0 | 81.0 | 78.0 | 73.0 | 70.0 | |
| NTP815 | 97.0 | 97.0 | 95.0 | 93.0 | 93.0 | 90.0 | 88.0 | |

As a result of analyzing the results of the above Table 4, it is found that initial water repellency is improved in the present invention compared to Commercial product, since the enduring water-repellent area is about 18% greater for the present invention than that of the Commercial product, when the water repellency test was carried out after the treatment of a water-repellent tissue.

### Test 3 (Test for measuring frictional force)

Frictional force was measured not by following any standard testing method, but by monitoring electric currents that are related to the degree of the frictional forces. In this case, a resistance value which is used herein as an index of frictional forces does not represent a quantitative resistance value. Rather, it is an index for comparing frictional forces among different wiper rubber blades. In other words, when a windshield wiper is running, a constant amount of voltage is maintained while an electric current constantly changes. In this regard, the present test is based on a principle that, if less friction occurs on the surface of a windshield glass less amount of electric current will flow, while more friction occurs on the surface of a windshield glass more amount of electric current will flow.

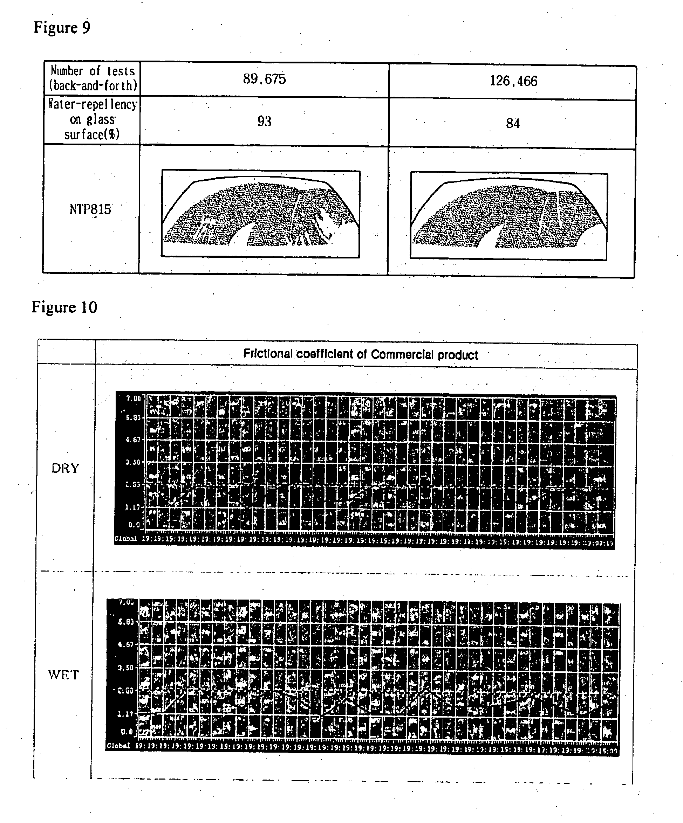

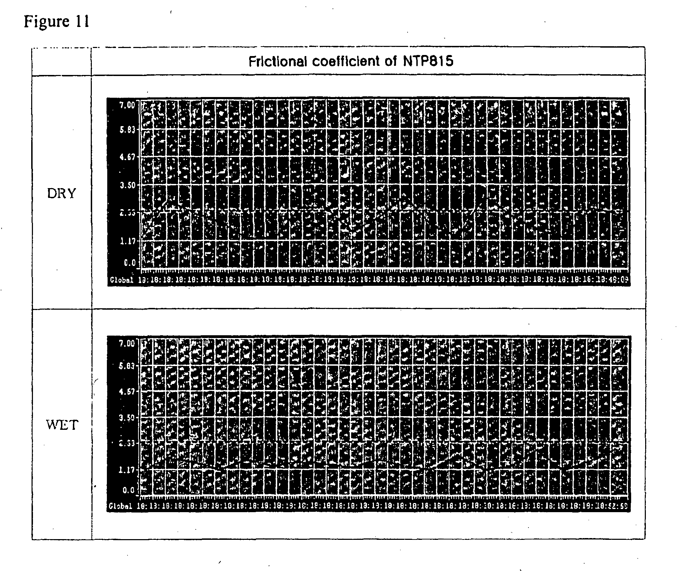

Frictional coefficients were measured for the product of the present invention (NTP815) and a comparative product (i.e., Commercial product) under dry or wet condition, without a treatment with a water-repellent tissue for initial water-repellency test. The results are summarized in Figure 10 and Figure 11, respectively.

As a result, it was found that, for a comparative product the frictional coefficient was (1) 1.17 ∼ 2.5 A under the dry state, and (2) 1.17 ∼ 2.5 A under the wet state. For the product of the present invention, the frictional coefficient was (1) 1.19 ∼ 2.7 A under the dry state, and (2) 1.17 - 2.0 A under the wet state. In this regard, considering that frictional coefficients themselves are not taken as a quantitative value but to be understood as an index to figure out relative frictional forces by comparing the amounts of electric current, the product of the present invention showed higher electric current compared to a comparative commercial product. Thus, it was confirmed that the product of the present invention has better resistance to frictional forces than a comparative commercial product.

Moreover, similar results are obtained from the tests using the costing compositions that have been prepared from Example 2 and Example 3. Detailed comparative tables are not shown.

### Brief description of the drawings

Figure 1 shows a cross-section of conventional wiper blade rubbers in which a head part having an internal spring rail is coupled to a wedge part contacting the surface of windshield glass via flexing bridge.
Figure 2 shows a cross-section of two wiper blade rubbers of the present invention in which two wiper blade rubbers, each comprising in one integrated body a head part with an eternal spring rail and a wedge part contacting the surface of the windshield glass, are loosely connected and facing each other via connection.
Figure 3 is a graph showing the results of the water repellency test for the wiper blade without a pre-treatment of a water-repellent tissue, wherein the results are shown in terms of the water repellency (%) and the number of tests.
Figure 4 and Figure 5 show photographic images of car windshield glass showing initial water-repellent state of a comparative product (Commercial product) and the product of the present invention (NTP815), according to a different number of back-and-forth wiper motion.
Figure 6 is a graph showing the results of the water repellency test for the wiper blade which has been pre-treated with a water-repellent tissue, wherein the results are shown in terms of the water repellency (%) and the number of tests.
Figure 7 shows a photographic image of car windshield glass showing an enduring water-repellency of a comparative product (Commercial product), according to a different number of back-and-forth wiper motion.
Figure 8 and Figure 9 show photographic images of car windshield glass showing an enduring water-repellency of the product of the present invention (NTP815), according to a different number of back-and-forth wiper motion.
Figure 10 is a graph showing a frictional coefficient of a comparative product (Commercial product) without a pre-treatment of a water-repellent tissue, measured under dry or wet state, respectively.
Figure 11 is a graph showing a frictional coefficient of the product of the present invention (NTP815) without a pre-treatment of a water-repellent tissue, measured under dry or wet state, respectively.

## Claims

1. Coating composition for coating wiper blade rubbers comprising, based on the total weight of the composition:
3.5 to 15 wt% of tetrafluoroethylene;
3.2 to 9.6 wt% of polyurethane;
1.6 to 6.0 wt% of polyhydromonomethylsiloxane oil or resin;
5.0 to 25.0 wt% of water-based resin;
and solvent;
wherein said composition is obtained by:
preparing each component in the form of particles having a particle size of 50 to 500 nm; and adding said solvent.

2. The coating composition according to Claim 1, wherein said solvent is distilled water.

3. The coating composition according to Claim 2, wherein it further comprises 0.16 to 0.5 wt% of silver component, or 3.5 to 15 wt% of graphite or carbon black, or both of the silver component and the graphite component, and these additional components have a particle size of 50 to 500nm.

4. Method of coating wiper blade rubbers with the composition according to any one of Claims 1 to 3.

5. The method according to Claim 4, **characterized in that** said rubbers are natural rubber, butadiene rubber, styrene-butadiene rubber, EPDM rubber, chloroprene rubber, or silicone rubber.

6. The method according to Claim 4 or 5, **characterized in that** said coating is carried out by pre-treating the wiper blade rubbers with an intermediate medium for the smooth coating, preheating the rubbers to the temperature at which the rubber surface can expand, and then coating the resulting rubbers with the coating composition by spray coating method.

7. The method according to any one of Claims 4 to 6, **characterized in that** said rubbers are natural rubber, butadiene rubber, styrene-butadiene rubber, EPDM rubber chloroprene rubber, or silicon rubber.

## Patentansprüche

1. Beschichtungszusammensetzung zum Beschichten von Wischblattgummis, umfassend, basierend auf dem Gesamtgewicht der Zusammensetzung:
3,5 bis 15 Gew.-% Tetrafluorethylen;
3,2 bis 9,6 Gew.-% Polyurethan;
1,6 bis 6,0 Gew.-% Polyhydromonomethylsiloxanöl oder -harz;
5,0 bi 25,0 Gew.-% Harz auf Wasserbasis;
und Lösungsmittel;
worin die Zusammensetzung erhalten wird durch:
Herstellen jeder Komponente in Form von Teilchen mit einer Teilchengröße von 50 bis 500 nm; und Zugeben des Lösungsmittels.

2. Beschichtungszusammensetzung nach Anspruch 1, worin das Lösungsmittel destilliertes Wasser ist.

3. Beschichtungszusammensetzung nach Anspruch 2, worin sie weiterhin 0,16 bis 0,5 Gew.-% Silberkomponente oder 3,5 bis 15 Gew.-% Graphit oder Kohleschwarz, oder sowohl Silberkomponente als auch Graphitkomponente umfasst, und worin diese zusätzlichen Komponenten eine Teilchengröße von 50 bis 500 nm aufweisen.

4. Verfahren zum Beschichten von Wischblattgummis mit der Zusammensetzung nach einem der Ansprüche 1 bis 3.

5. Verfahren nach Anspruch 4, **dadurch gekennzeichnet, dass** die Gummis natürliche Gummis, Butadien-Gummi, Styrol-Butadien-Gummi, EPDM-Gummi, Chloroprengummi oder Silikongummi sind.

6. Verfahren nach Anspruch 4 oder 5, **dadurch gekennzeichnet, dass** das Beschichten durchgeführt wird durch Vorbehandeln der Wischblattgummis mit einem Zwischenmedium für die gleichmäßige Beschichtung, Vorerwärmen des Gummis auf die Temperatur, bei welcher die Gummioberfläche expandieren kann, und dann Beschichten des resultierenden Gummis mit einer Beschichtungszusammensetzung durch ein Sprühbeschichtungsverfahren.

7. Verfahren nach einem der Ansprüche 4 bis 6, **dadurch gekennzeichnet, dass** die Gummis natürliche Gummis, Butadien-Gummi, Styrol-Butadien-Gummi, EPDM-Gummi, Chloroprengummi oder Silikongummi sind.

## Revendications

1. Composition de revêtement pour revêtir des caoutchoucs de balai d'essuie-glace comprenant, sur la base du poids total de la composition :
3,5 % à 15 % en poids de tétrafluoroéthylène ;
3,2 % à 9,6 % en poids de polyuréthane ;
1,6 % à 6,0 % en poids d'une huile ou d'une résine de polyhydromono-méthylsiloxane ;
5,0 % à 25,0 % en poids d'une résine à base d'eau ;
et un solvant ;
dans laquelle ladite composition est obtenue par :
la préparation de chaque composant sous la forme de particules ayant une taille de particule de 50 nm à 500 nm ; et
l'ajout dudit solvant.

2. Composition de revêtement selon la revendication 1, dans laquelle ledit solvant est de l'eau distillée.

3. Composition de revêtement selon la revendication 2, comprenant en outre 0,16 % à 0,5 % en poids d'un composant d'argent, ou 3,5 % à 15 % en poids de graphite ou de noir de carbone, ou à la fois le composant d'argent et le composant en graphite, et ces composants supplémentaires ont une taille de particule de 50 nm à 500 nm.

4. Procédé de revêtement de caoutchoucs de balai d'essuie-glace avec la composition selon l'une quelconque des revendications 1 à 3.

5. Procédé selon la revendication 4, **caractérisé en ce que** lesdits caoutchoucs sont un caoutchouc naturel, un caoutchouc de butadiène, un caoutchouc de styrène/butadiène, un caoutchouc EPDM, un caoutchouc de chloroprène ou un caoutchouc de silicone.

6. Procédé selon la revendication 4 ou 5, **caractérisé en ce que** ledit revêtement est réalisé par le prétraitement des caoutchoucs de ballet d'essuie-glace avec un milieu intermédiaire pour le revêtement lissé, le préchauffage des caoutchoucs à une température à laquelle la surface des caoutchoucs peut se dilater, puis le revêtement des caoutchoucs résultants avec la composition de revêtement par un procédé de revêtement par pulvérisation.

7. Procédé selon l'une quelconque des revendications 4 à 6, **caractérisé en ce que** lesdits caoutchoucs sont un caoutchouc naturel, un caoutchouc de butadiène, un caoutchouc de styrène/butadiène, un caoutchouc EPDM, un caoutchouc de chloroprène ou un caoutchouc de silicone.
